# EUROPEAN PATENT SPECIFICATION

(11) **EP 1 862 098 B1**
(45) Date of publication and mention of the grant of the patent: **20.11.2013**
(21) Application number: 06705742.2
(22) Date of filing: 14.03.2006
(51) Int. Cl.: A47G 29/087, A47G 1/17, A47G 25/08, F16B 47/00

(54) **ADHESIVE FILM TYPE SUPPORT MEMBER FOR WALL SURFACE**
KLEBEFOLIENARTIGES STÜTZELEMENT FÜR WANDOBERFLÄCHE
ELEMENT DE SUPPORT DE TYPE FILM ADHESIF POUR SURFACE MURALE

(30) Priority: 16.03.2005 CN 05208575 U
(43) Date of publication of application: 05.12.2007
(73) Proprietor: Lan, Yung-huei, Taipei Taiwan (TW)
(72) Inventor: Lan, Yung-huei, Taipei Taiwan (TW)
(74) Representative: Viering, Jentschura & Partner
(86) International application number: PCT/CN2006/000393
(87) International publication number: WO 2006/097042

(56) References cited:
- EP-A- 0 653 572
- EP-A1- 1 388 316
- BE-A- 549 130
- CN-Y- 2 127 284
- CN-Y- 2 240 940
- CN-Y- 2 459 993
- CN-Y- 2 461 430
- GB-A- 486 013
- GB-A- 2 330 295
- JP-A- 6 109 014
- JP-A- 11 000 255
- JP-A- 11 128 055
- US-A- 2 190 550
- US-A- 4 848 713
- US-A- 5 078 356
- US-A- 5 921 514
- US-A- 5 964 437
- US-A- 6 053 464
- US-A- 6 131 865
- US-A1- 2004 188 580
- US-A1- 2005 044 673

## Description

### FIELD OF THE INVENTION

The present invention relates to a daily life accessory and more particularly to a sticker supporting member for a wall surface.

### BACKGROUND OF THE INVENTION

In daily life, the supporting members for wall surfaces in general are used for supporting the cloth or hat hangers, soap racks, towel rods in the bathroom and so on. China patent publication no. CN2459993Y disclosed a sticker supporting member for a wall surface including a base, a sticker, and a supporting member. The supporting member has a suitable frame shape and is connected with the base. The sticker has good air sealing function and can be stuck onto the wall tightly. The sticker is connected with the base and has a surface extended outward beyond the edges of the base. Since the sticker and the wall are stuck together, the contact area of the sticker to the wall is larger than the back area of the base, and the sticker stuck on the wall has a good air sealing function, so it is very convenient that the sticker supporting member for a wall surface can be fixed on the wall tightly and for a long time. When in use, in order to fix the sticker supporting member on the wall tightly, it is necessary to squeeze out the air of the adherent location of the sticker at the time of adhesion. At the same time, the user has to prevent the air entrance between the sticker and the wall as much as possible. However, in the connecting section of the base and the sticker, the surface of the sticker and the side surface of the base are almost forming a right angle to form a cross line between the conventional sticker supporting member and the wall surface. Therefore, user's fingers can not reach the position around the cross line so that there is a dead corner incurred. Since the fingers can not press the sticker around the connecting section of the base and the sticker, the air bubble under the sticker can not be squeezed out. Moreover, the air will pass through the base and get into between the sticker and the wall such that the vacuum between the sticker and the wall becomes less and the adhesion is negatively influenced.

US5964437A discloses a mounting support for securing objects to a substantially flat surface, the mounting support comprising a body of soft, pliable material. The body has substantially parallel inner and outer major faces. The inner face is formed to have a slight concavity but is sufficiently soft and pliable to conform to and thus secure itself to roughened surfaces.

### SUMMARY OF THE INVENTION

The present invention aims to solve the defects mentioned above and provides an improved sticker supporting member for wall which can easily squeeze out the air at the time of adhesion and prevent the air from passing through the base and getting into between the sticker and the wall surface. Thus, the condition of vacuum becoming less can be postponed and the adhesion time can be extended.

The present invention provides the following technology:
A sticker supporting member intended to be stuck to a wall surface comprises: a base including a bottom surface; an adhesive member; a supporting member connected to the base; the adhesive member being a sticker which can air sealingly and tightly stick to smooth walls, the sticker having an upper surface located beneath the base and adhering to the bottom surface of the base, and the sticker also having a surface extending radially outwardly from the edges of the base; wherein a connecting section of a side face of the base with the surface of the adhesive member is a transitional face located at the base and extending toward the edges of the adhesive member; and wherein the transitional face is an inclined plane or a cambered plane connecting the surface of the base to the surface of the adhesive member, and is arranged so as to leave no dead corner for fingers, which fingers thereby, when moving over the transitional face at the time of sticking the sticker supporting member to a wall, will squeeze out the air between the sticker and the base continuously and completely from the edges of the base to the edges of the sticker.

Other features in particular embodiments of the present invention are outlined in the following paragraphs.

The base has metal layers to prevent air molecule permeating. The metal layers include an inner metal layer and an outer metal layer. These two metal layers are separated from each other or have a weak connection structure.

A portion of the base opposite the bottom surface has a thread structure for connecting with other objects.

The sticker supporting member further has a friction plate which is pressed onto the surface of the base and generates an upward force to counterbalance, in use, the weight of the heavy object supported by the supporting member along the vertical direction. The friction plate is directly wedged onto the sticker supporting member, connected with the base, or is traversed by a screw connecting it to a thread hole of the metal layer in the base.

The metal layer in the base is parallel to a bottom face of the base.

The middle of the bottom face of the base is slightly concave in a free condition.

The metal layer has elasticity. The inner metal layer is a surface cambered so as to project away from the bottom surface of the base.

Some part of the metal layer of the base can extend out of the base and directly form a hook shape or any other supporting member shape.

The surface of the base or the base with the sticker is spray coated with an air isolating layer for preventing air permeating. A spray of the air isolated layer can be a metal spray or fluid glass.

The sticker supporting member for a wall can easily discharge the air between the sticker and the wall completely by the transitional face. There is no air remaining. The metal layer in the base can prevent the air gradually passing through the base and permeating between the sticker and the wall so that the peeling incurred because of the air permeating after a long time can be avoided. Further, since the metal layers include the inner metal layer and the outer metal layer, when the metal layer receives the pulling force, the inner metal layer will move outward but the outer layer is still. Thus, a space is formed between the sticker and the wall for containing air. The reduction of the vacuum between the sticker and the wall can be slow down. Besides, the surface of the base or the base with the sticker is sprayed an air isolated layer for preventing the air permeating. Thus, it is more effective to prevent the air permeating and prolong the adhesive time.

The present invention can connect with other objects by a thread on the upper position of the base or installing the hanger, the insert trough, and the insert seat. By cooperating with other objects, the present invention can have more purposes and functions and enhance the practicability.

The present invention can be applied to the walls of bathrooms, kitchens, bedrooms, living rooms, refrigerators and wardrobes. It is convenient to attach, firm, and easily to exchange.

### BRIEF DESCRIPTION OF THE DRAWINGS

FIG. 1 is a whole structure view of a first preferred embodiment of the present invention.
FIG. 2 is a top view of the first preferred embodiment of the present invention.
FIG. 3 is a left view of the first preferred embodiment of the present invention.
FIG. 4 is a right view of the first preferred embodiment of the present invention.
FIG. 5 is a cross-sectional view of a metal layer of the first preferred embodiment of the present invention.
FIG. 6 is a cross-sectional view of structure variation when the metal layer of FIG.5 receives the pulling force along the arrow direction.
FIG. 7 is a cross-sectional view of the metal layer of the first preferred embodiment formed an outward protruding cambered surface shape structure.
FIG. 8 is a cross-sectional view of structure variation when the metal layer of FIG. 7 receives the pulling force along the arrow direction.
FIG. 9 is a cross-sectional view of structure variation when the metal layer of FIG.7 receives the stress along the arrow direction.
FIG. 10 is a whole structure view of a second preferred embodiment of the present invention.
FIG. 11 is a cross-sectional view in the A-A position of FIG.10 and shows a structure of a friction plate and the metal layer of second preferred embodiment of the present invention.
FIG. 12 is a cross-sectional view of structure variation when the metal layer of FIG.11 receives the pulling force along the arrow direction.
FIG.13 is a cross-sectional view of the structure of the metal layer formed an outward protruding cambered surface shape and the friction plate of the second preferred embodiment.
FIG. 14 is a cross-sectional view of structure variation when the metal layer of FIG.13 receives the pulling force along the arrow direction.
FIG. 15 is a cross-sectional view of structure variation when the metal layer of FIG.13 receives the stress along the arrow direction.
FIGS. 16a and 16b are views of the first preferred embodiment in FIG. 1 for additionally hanging on a soap case.
FIGS. 17a and 17b are views of the first preferred embodiment in FIG. 1 for additionally hanging on a liquid soap bottle.
FIGS. 18a and 18b are views of the first preferred embodiment in FIG. 1 for additionally hanging on a hanger.

### DETAILED DESCRIPTION OF THE PREFERRED EMBODIMENTS

The present invention is further described with the drawings and the embodiments of the drawings.

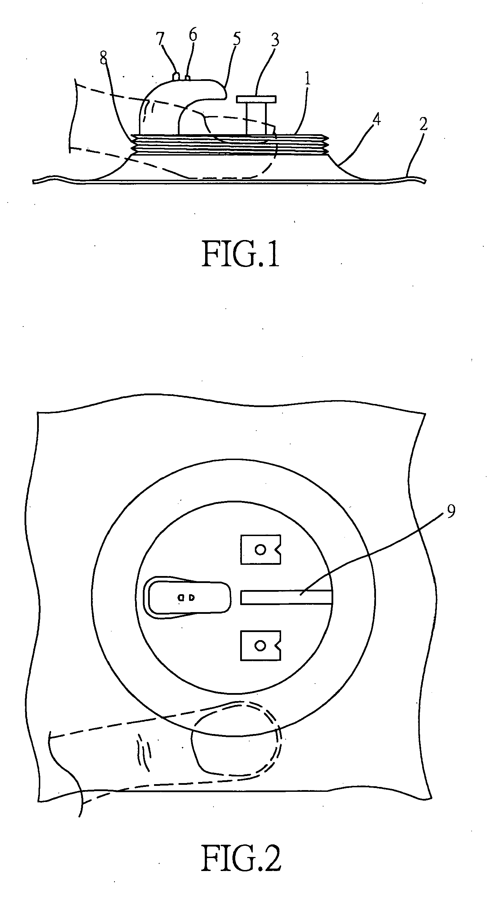

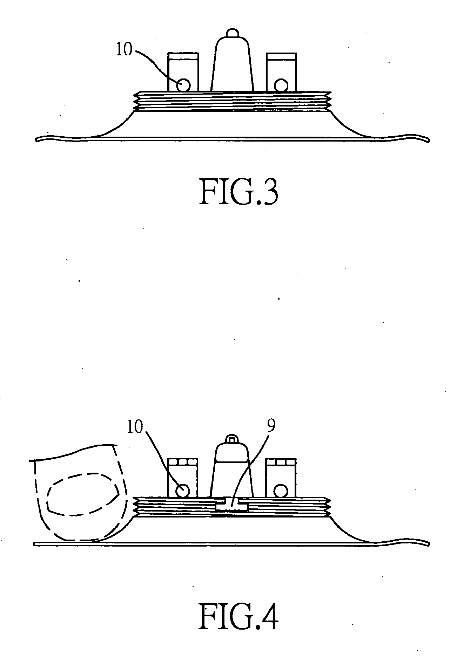

FIGS. 1 to 4 illustrate a preferred embodiment for the present invention. In this preferred embodiment, the sticker supporting member of a wall includes a base 1, an adhesive member, e.g., a static sticker 2, and a supporting member connected onto the base 1. The base 1 is made of PVC material and includes a bottom surface to be adhered with the static sticker 2. The adhesive member has good air sealing function and is a sticker 2 which can stick with smooth walls tightly.

The supporting member is a hanger 5. The sticker 2 can air sealingly and tightly stick with the base 1 and has an even thickness, and an area of the sticker 2 is more than the bottom surface of the base 1 so that the sticker 2 is adhered to a smooth wall or workpiece. Besides, the sticker 2 includes a connecting area fixed on the bottom surface of the base 1 and an extending zone extending outward from edges of the base 1. The characteristic of the present invention is that a connecting section of the side face of the base 1 with the surface of the sticker 2 is a transitional face 4 extending from the edges of the base 1 to the outer circumference of the sticker 2. In this preferred embodiment, the transitional face 4 is a cambered surface and the surface of the transitional face 4 is slightly rough. Thus, during the adhesion, the appearance can be maintained because it is not easy to be found that there is glue flowing over. The transitional face 4 is suitable for fingers slipping through without interspaces. When fingers touch the base 1 and the sticker 2, there is no dead corner in the connecting section of the base 1 and the sticker 2. When the fingers move from the edges of the base 1 to the outer circumference of the sticker 2 to squeeze out the air, the air between the sticker 2 and the base 1 will be squeezed out continuously and completely from the edges of the base 1 to the edges of the sticker 2. There is no air bubble between the sticker 2 and the wall surface at the time of adhesion because the sticker 2 and the wall surface can be tightly and firmly closed up. The sticker supporting member of a wall can fix on the wall or glass for a long time without the peeling incurred.

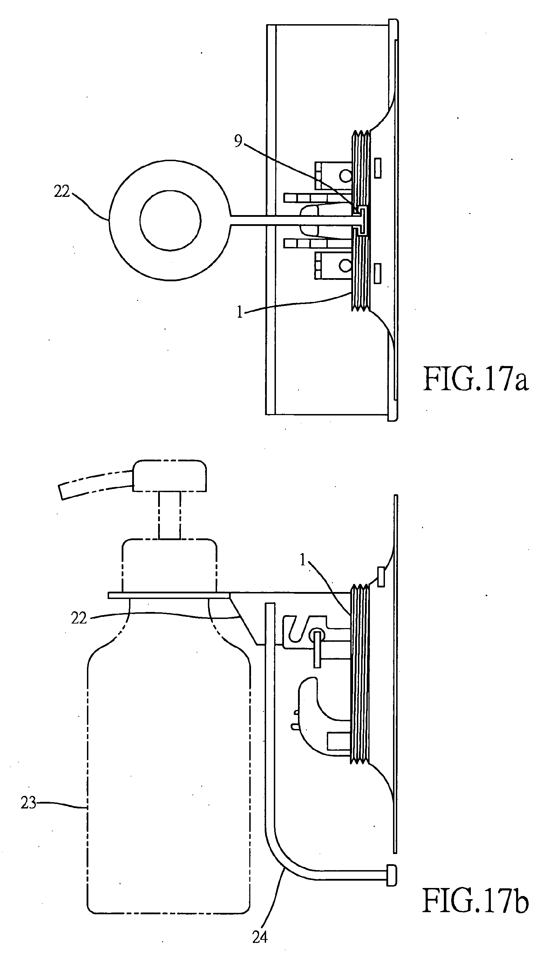

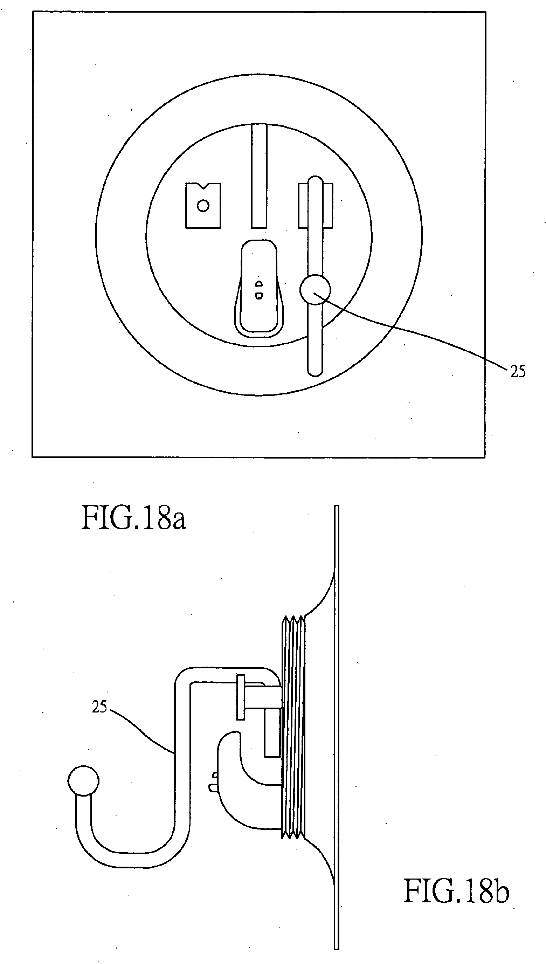

The base 1 of this preferred embodiment further has an outer thread 8 on the upper position such that the base 1 can operate with other objects which have inner thread correspondingly. Thus, the function of the present invention will become more and the present invention can directly hold the heavy objects which have threads outside their surfaces. The supporting member of this preferred embodiment can have various structures according to the needs of the hang-on devices and enlarges the use range of the sticker supporting member for a wall. In this preferred embodiment, the supporting member includes the hanger 5, an insert seat 3 and an insert trough 9. The hanger 5 has a fastening structure to wedge with the plug in device. The fastening structure can be a sharp protruding 6 on the outside of the hanger 5. Under the sharp protruding 6, there is a block 7 with an even and smooth surface to prevent fingers from scratching. The insert seat 3 has a hole 10 for receiving the hanger 25 (as shown in FIGS. 18a and 18b). The insert trough 9 is installed on the surface of the base 1. A support rack 24 having the plug can insert into the insert trough 9 (as shown in FIGS. 17a and 17b).

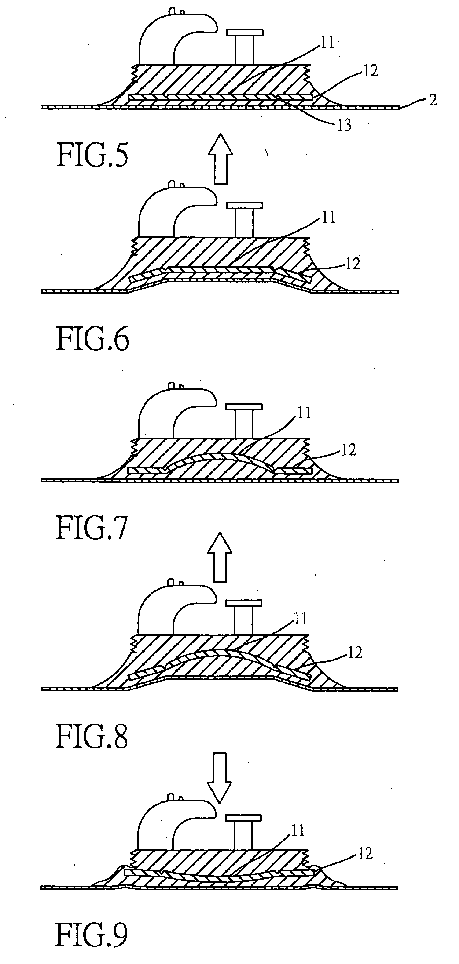

Please refer to FIGS. 5 to 9. The base 1 of the present invention has metal layers for buffering the vacuum. The metal layers are parallel to the bottom of the base 1 and include an inner metal layer 11 and an outer metal layer 12. These two metal layers 11, 12 can be separated from each other and divided into two portions or have a weak connection structure 13 between them for forming a cushion space when they suffer from the press. As shown in FIG. 6. When the metal layer receives the pulling force along the arrow direction which is vertical to the metal plane, the inner metal layer 11 will move outward more but the outer metal layer 12 will move outward less. The space formed between the sticker 2 and the wall for containing the air will make the vacuum between them decrease slowly. As shown in FIG. 7, the metal layer is a cambered surface structure cambered so as to project away from the bottom surface of the base 1. The metal layer is a steel piece with elasticity. As shown in FIG. 8, when the metal layer receives the pulling force along the arrow direction which is vertical to the metal plane, the cambered surface can release the rapid variation of the receiving force between the sticker 2 and the wall. Also, the vacuum between them will decrease slowly. When taking off the sticker 2, providing the press to the base 1 along the arrow direction as shown in FIG. 9, the metal layer receives the inward press vertical to the metal plane, the inner metal layer 11 will move inward. Since the steel piece has elasticity, the metal layer will change shape or tilt such that the base 1 and the sticker 2 can be easily separated from the wall. The middle portion of the bottom of the base 1 has a cave with a slight range under the free condition as shown in FIG. 7. For the wall having adhesive resistance to the sticker 2, press the middle portion of the base 1 to the wall when adhesion, the bottom of the base 1 will be pressed to be even. In the meanwhile, press the peripheral sticker to attach the wall. When the hand moves off, a little of vacuum between the middle portion of the base 1 and the wall is formed because of the resilience of the base 1. The sticker 2 attached to the wall around the base 1 is also affected by the vacuum and thus sticks on the wall more tightly. The present invention can prevent peeling when there is no force. When the present invention receives the force to separate from the wall, larger vacuum will be formed between the base 1 and the wall, and thus can prevent peeling more effectively.

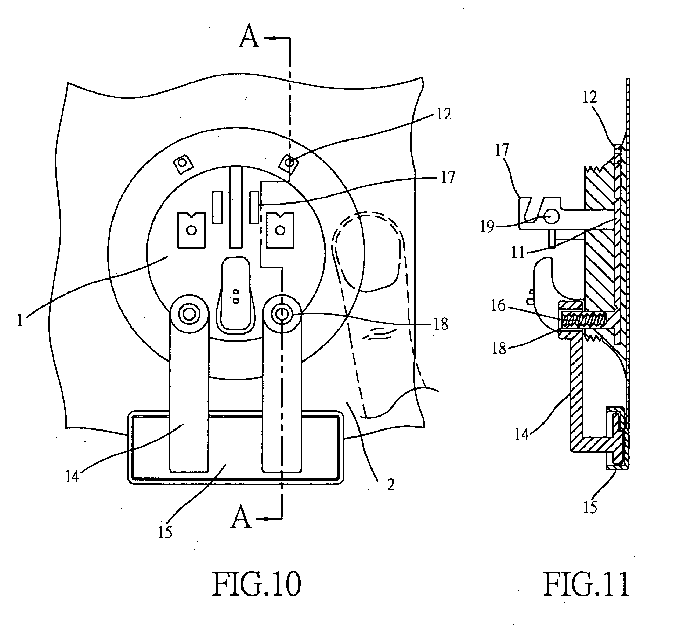

FIGS. 10 and 11 show the second preferred embodiment of the present invention. The difference from the first preferred embodiment is to further have a friction plate 14. The friction plate 14 can connect with the base 1 or a rod extending from the metal layer of the base 1 through the thread. In this preferred embodiment, the friction plate 14 connects with a thread rod 18 extending from the metal layer of the base 1 through a thread hole 16. A seat 15 of the friction plate 14 can directly press to the wall. When the supporting member is under the load-bearing condition, the friction plate 14 passing through the seat 15 will suffer the force which is pressed to the wall. An upward force is generated to counterbalance the gravity of the heavy object along the erective direction to cause the supporting effect. Another difference is that some part of the outer metal layer 12 of the base 1 can extend out of the base 1 and directly form a hook shape or any other supporting member shape. Also, the extended part can be used as a firm foundation or stand. A hole installed on it can securely couple with the supported object. The inner metal layer 11 can directly pass through PVC materials to form an extended hanger 17. The extended hanger 17 has a hook and an aperture 19 to hang up heavier objects.

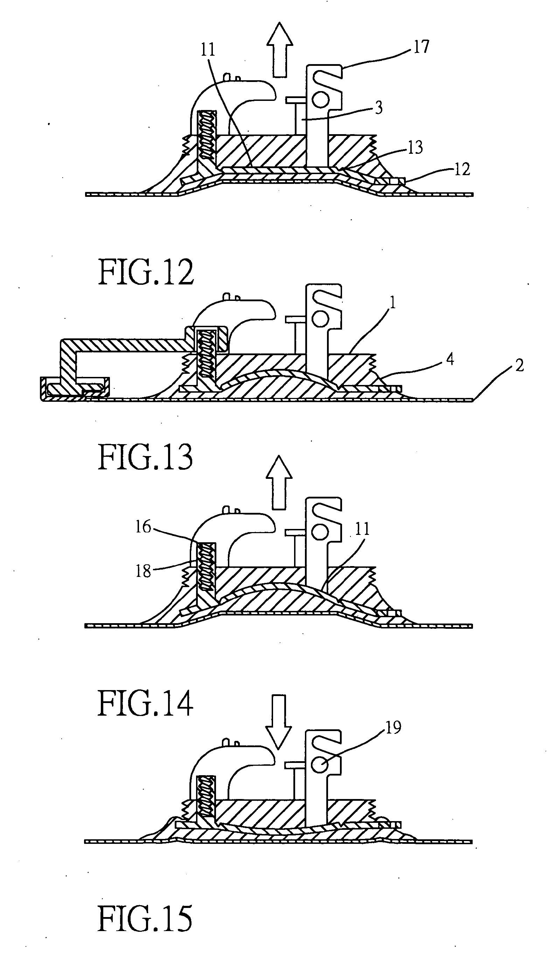

Please refer to FIGS. 12 to 15. FIG. 12 is a cross-sectional view of the metal layer of the second preferred embodiment. The metal layers in the base 1 include the inner metal layer 11 and the outer metal layer 12. The metal layers are parallel to the bottom of the base 1. The weak connection structure 13 is installed between the inner metal layer 11 and the outer metal layer 12. In FIG. 13, the metal layer is a cambered surface structure outward projecting. The metal layer is a steel piece with elasticity. When receiving the force as shown in FIG. 14 and FIG. 15, the variation condition is the same as the first preferred embodiment. The middle of the bottom face of the base 1 is slightly concave in a free condition as shown in FIG. 13.

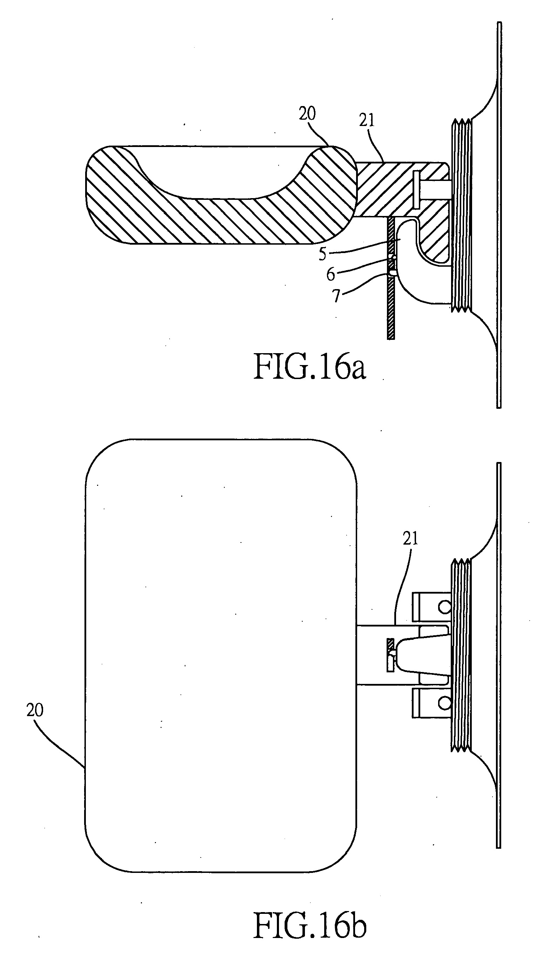

FIGS. 16a and 16b are perspective views of the first preferred embodiment in FIG. 1 for additionally hanging on a soap case. FIG. 16a is the main view of the structure and FIG. 16b is the top view of the structure. A soap bracket 21 is wedged in the base 1 by the hanger 5, the sharp protruding 6 and the block 7. It is very convenient that a soap case 20 can be put above it.

FIGS. 17a and 17b are perspective views of the first preferred embodiment in FIG. 1 for additionally hanging on a liquid soap bottle. FIG. 17a is the main view of the structure and FIG. 17b is the top view of the structure. A ring bracket 22 passes through the hook and is fixed on the base 1. A liquid soap bottle can be put within a ring of the ring bracket 22. A supporting rack 24 of the ring bracket 22 has a hold to support the wall such as the function of the friction plate 14.

FIGS. 18a and 18b are perspective views of the first preferred embodiment in FIG. 1 for additionally hanging on a hanger. FIG. 18a is the main view of the structure and FIG. 18b is the side view of the structure. An additional hanger 25 is fixed on the base 1 by the hole 10. Towels or small objects can be hung on as well. The additional hanger 25 can be taken off to store if it is not needed.

The surface of the base 1 or the base 1 with the sticker 2 can be sprayed an air isolated layer for preventing the air permeating. A spray of the air isolated layer can be a metal spray or fluid glass to further prevent from the air permeating and enhance the reliability of the sticker supporting member of a wall.

While the preferred embodiment of the invention has been set forth for the purpose of disclosure, modifications of the disclosed embodiment of the invention as well as other embodiments thereof may occur to those skilled in the art. Accordingly, the appended claims are intended to cover all embodiments which do not depart from the scope of the invention.

## Claims

1. A sticker supporting member intended to be stuck to a wall surface comprising:
a base (1) including a bottom surface;
an adhesive member (2); and
a supporting member connected to the base (1);
wherein the adhesive member (2) is a sticker which can air sealingly and tightly stick to smooth walls, the sticker having an upper surface located beneath the base (1) and adhering to the bottom surface of the base (1), and the sticker also having a surface extending radially outwardly from the edges of the base (1);
wherein a connecting section of a side face of the base (1) with the surface of the adhesive member (2) is a transitional face (4) located at the base (1) and extending toward the edges of the adhesive member (2); and
wherein the transitional face (4) is an inclined plane or a cambered plane connecting the surface of the base (1) to the surface of the adhesive member (2), and is arranged so as to leave no dead corner for fingers, which fingers thereby, when moving over the transitional face (4) at the time of sticking the sticker supporting member to a wall, will squeeze out the air between the sticker and the base (1) continuously and completely from the edges of the base (1) to the edges of the sticker.

2. The sticker supporting member of claim 1, wherein the base (1) has metal layers (11, 12) to prevent air molecules from permeating, the metal layers (11, 12) including an inner metal layer (11) and an outer metal layer (12), and two metal layers (11, 12) are separated from each other or have a weak connection structure (13).

3. The sticker supporting member of claim 2, wherein the metal layer is a metal piece with elasticity and the inner metal layer (11) is a surface cambered so as to project away from the bottom surface of the base (1).

4. The sticker supporting member of claim 1, wherein the sticker supporting member further includes a hanger (5), an insert trough (9) and an insert seat (3), the hanger (5) having a fastening structure being extendedly located on an exterior side of the hanger (5).

5. The sticker supporting member of claim 1, wherein the surface of the base (1) or the base (1) with the sticker is spray coated with an air isolating layer for preventing air permeating.

6. The sticker supporting member of claim 1, wherein a portion of the base (1) opposite the bottom surface has a thread structure for connecting with other objects.

7. The sticker supporting member of claim 1, wherein the sticker supporting member further has a friction plate (14) which is pressed onto the surface of the base (1) and generates an upward force to counterbalance, in use, the weight of a heavy object supported by the supporting member along the vertical direction, and the friction plate (14) is directly wedged onto the sticker supporting member, is connected with the base (1), or is traversed by a screw connecting it to a thread hole (16) of a metal layer (12) in the base (1).

8. The sticker supporting member of claim 1, wherein a metal layer (12) in the base (1) is parallel to the bottom face of the base (1).

9. The sticker supporting member of claim 1, wherein a middle portion of a bottom face of the base (1) is slightly concave in a free condition.

10. The sticker supporting member of claim 2 or 3, wherein some part of the metal layers (11, 12) of the base (1) extends out of the base (1) and directly forms a hook shape or supporting member shape.

11. The sticker supporting member of claim 1, wherein the sticker has an even thickness.

## Patentansprüche

1. Ein Trägerelement für Aufkleber zum Befestigen an eine Wandfläche, bestehend aus:
einer Basis (1) mit einer Unterseite;
einem anhaftenden Teil (2); und
einem Trägerelement, das an der Basis (1) befestigt ist,
wobei das anhaftende Teil (2) ein Aufkleber ist, der als einen Luftabdichtung dient und der fest an glatte Wandflächen angehaftet werden kann; der Aufkleber eine obere Fläche unter der Basis (1) aufweist, wobei der Aufkleber auf der Unterfläche der Basis (1) angehaftet ist; der Aufkleber weiter eine von den Kanten der Basis (1) radial nach außen erweiterte Fläche aufweist; ein Kontaktteil auf einer Seitenfläche der Basis (1) mit der Fläche des anhaftenden Teils (2) an der Basis (1) eine Übergangsfläche (4) bilden,
wobei sich dieses Kontakkteil zu den Kanten des anhaftenden Teils (2) erstreckt; und
wobei die Übergangsfläche (4) als eine mit der Oberfläche der Basis (1), die bis zur Oberfläche des anhaftenden Teils (2) reicht, übereinstimmende geneigte oder gewölbte Fläche gebildet und so angeordnet ist, damit keine toten Winkel für die Finger vorhanden sind; beim Fahren mit den Fingern über die Übergangsfläche (4), wenn diese an eine Wand angehaftet wird, die Luft zwischen dem Aufkleber und der Basis (1) kontinuierlich von vollständig von den Kanten der Basis (1) zu den Kanten des Aufklebers ausgedrückt wird.

2. Das Trägerelement für Aufkleber nach Anspruch 1, **dadurch gekennzeichnet, dass** die Basis (1) aus Metallschichten (11, 12) besteht, um mit diesen ein Eindringen der Luftmoleküle zu vermeiden, wobei diese Metallschichten (11, 12) eine innere Metallschicht (11) und eine äußere Metallschicht (12) aufweisen und die beiden Metallschichten (11, 12) voneinander getrennt sind oder einen schwachen Aufbau (13) aufweisen.

3. Das Trägerelement für Aufkleber nach Anspruch 2, **dadurch gekennzeichnet, dass** die Metallschicht als ein elastisches Metallteil gebildet ist, wobei die innere Metallschicht (11) eine gewölbte Oberfläche aufweist, um von der Unterfläche der Basis (1) weg vorzustehen.

4. Das Trägerelement für Aufkleber nach Anspruch 1, **dadurch gekennzeichnet, dass** das Trägerelement für Aufkleber weiter mit einem Aufhänger (5), einem Einsetzrille (9) und mit einem Einfügesitz (3) gebildet ist, wobei der Aufhänger (5) mit einem Befestigungsteil gebildet ist, das von einer Außenseite dieses Aufhängers (5) vorsteht.

5. Das Trägerelement für Aufkleber nach Anspruch 1, **dadurch gekennzeichnet, dass** die Oberfläche der Basis (1) oder die Basis (1) mit dem Aufkleber zum Abdichten gegen die Luft mit einer Schicht zum Luftabdichten sprühbeschichtet ist.

6. Das Trägerelement für Aufkleber nach Anspruch 1, **dadurch gekennzeichnet, dass** ein Teil der Basis (1) gegenüber der Unterseite zum Befestigen an andere Gegenstände eine Gewindestruktur aufweist.

7. Das Trägerelement für Aufkleber nach Anspruch 1, **dadurch gekennzeichnet, dass** das Trägerelement für Aufkleber weiter aus einem Reibungsplättchen (14) besteht, das auf die Oberfläche der Basis (1) angedrückt wird und als Gegengewicht eine nach oben wirkende Kraft erzeugt, wobei während dem Gebrauch das Gewicht eines schwereren Gegenstandes der vertikalen Richtung entlang vom Trägerelement getragen und das Reibungsplättchen (14) direkt auf das Trägerelement für Aufkleber verkeilt wird, an der Basis (1) befestigt oder mit einer Schraube, mit der es an ein Gewindeloch (16) der Metallschicht (12) in der Basis (1) befestigt ist, montiert wird.

8. Das Trägerelement für Aufkleber nach Anspruch 1, **dadurch gekennzeichnet, dass** eine Metallschicht (12) in der Basis (1) parallel zur Unterseite der Basis (1) angeordnet ist.

9. Das Trägerelement für Aufkleber nach Anspruch 1, **dadurch gekennzeichnet, dass** ein mittleres Teil einer Unterseite der Basis (1) leicht konkav gebildet ist.

10. Das Trägerelement für Aufkleber nach Anspruch 2 oder 3, **dadurch gekennzeichnet, dass** ein Teil der Metallschichten (11, 12) der Basis (1) aus der Basis (1) ragt und direkt eine Hakenform oder eine als Trägerelement geeignete Form bildet.

11. Das Trägerelement für Aufkleber nach Anspruch 1, **dadurch gekennzeichnet, dass** der Aufkleber eine gleichmäßige Dicke aufweist.

## Revendications

1. Un élément de support autocollant destiné à être collé sur la surface d'une paroi, comprenant:
une base (1) comportant une surface inférieure;
un élément adhésif (2); et
un élément de support relié à la base (1),
dans lequel l'élément adhésif (2) est un autocollant qui peut se coller de manière étanche et hermétique sur des parois lisses, l'autocollant ayant une surface supérieure située au-dessous de la base (1) et adhérant à la surface inférieure de la base (1), et l'autocollant possède également une surface s'étendant de façon radiale vers l'extérieur depuis les bords de la base (1);
dans lequel une section de connexion d'une face latérale de l'embase (1 ) avec la surface de l'élément adhésif (2) est une face de transition (4) située à la base (1) et s'étendant vers les bords de l'élément adhésif (2), et
dans lequel la face de transition (4) est un plan incliné ou un plan bombé reliant la surface de la base (1) à la surface de l'élément adhésif (2), et est agencé de manière à ne laisser aucun angle mort pour les doigts, lesquels doigts, qui de ce fait, lors du mouvement sur la face de transition (4) au moment du collage de l'élément de support d'adhésif à une paroi, vont faire sortir l'air entre l'adhésif et la base (1) continuellement et
complètement depuis les bords de la base (1) jusqu'aux bords de l'étiquette.

2. L'élément de support d'autocollant de la revendication 1, dans lequel la base (1) présente des couches métalliques (11, 12) pour empêcher toute molécule d'air de pénétrer, les couches métalliques (11, 12), comprenant une couche métalliques interne (11) et une couche métallique externe (12), et deux couches métalliques (11, 12) sont séparées l'une de l'autre ou ont une structure de connexion faible (13).

3. L'élément de support d'autocollant selon la revendication 2, dans lequel la couche métallique est une pièce métallique pourvue d'élasticité et la couche métallique interne (11) est une surface bombée de manière à faire saillie de la surface inférieure de la base (1).

4. L'élément de support d'autocollant selon la revendication 1, dans lequel l'élément de support d'autocollant comprend en outre un dispositif de suspension (5), un creux d'insertion (9) et un siège d'insertion (3), le dispositif de suspension (5) ayant une structure de fixation étant située de façon étendue sur un coté extérieur du dispositif de suspension (5).

5. L'élément de support d'autocollant selon la revendication 1, dans lequel la surface de la base (1) ou la base (1) avec l'autocollant est pulvérisé par une couche de revêtement isolante à l'air et empêcher l'air d'y pénétrer.

6. L'élément de support d'autocollant selon la revendication 1, dans lequel une partie de la base (1) opposée à la surface inférieure a une structure de fil pour la connexion avec d'autres objets.

7. L'élément de support d'autocollant selon la revendication 1, ou l'élément de support d'autocollant comporte en outre une plaque de friction (14) qui est pressée sur la surface de la base (1) et génère une force vers le haut pour compenser, durant l'utilisation, le poids d'un lourd objet supporté par l'élément de support le long de la direction verticale, et la plaque de friction (14) est directement calée sur l'élément de support d'autocollant, et reliée avec la base (1), ou est traversée par une vis de connexion au filet d'un trou (16) d'une couche métalliques (12) dans la base (1).

8. L' élément de support d'autocollant selon la revendication 1, dans lequel une couche métallique (12) dans la base (1) est parallèle à la face inférieure de la base (1).

9. L' élément de support d'autocollant selon la revendication 1, dans lequel une partie de milieu d'une face inférieure de la base (1) est légèrement concave dans une position libre.

10. L'élément de support d'autocollant selon la revendication 2 ou 3, dans lequel des parties de couches métalliques (11, 12) de la base (1) s'étendent hors de la base (1) et prennent directement la forme d'un crochet ou la forme d'un élément de support.

11. L' élément de support d'autocollant selon la revendication 1, dans lequel l'autocollant a une épaisseur uniforme.
